# EUROPÄISCHE PATENTANMELDUNG

(11) **EP 3 499 094 A1**
(43) Veröffentlichungstag der Anmeldung: **19.06.2019**
(21) Anmeldenummer: 17207316.5
(22) Anmeldetag: 14.12.2017
(51) Int. Cl.: F16H 61/04, F16H 61/688, F16H 3/00, F16H 3/12

(54) **GETRIEBE FÜR EIN KRAFTFAHRZEUG**

(71) Anmelder: ZF Friedrichshafen AG, 88046 Friedrichshafen (DE)
(72) Erfinder: Reisch, Matthias, 88214 Ravensburg (DE); Stoelcker, Gregor, 13467 Berlin (DE)

(57) **Zusammenfassung**

Getriebe (G) für ein Kraftfahrzeug, wobei das Getriebe (G) eine Antriebswelle (GW1), zwei über jeweils eine Eingangskupplung (K1, K2) mit der Antriebswelle (GW1) verbindbare Eingangswellen (W1, W2) welche je einem Teilgetriebe (TG1, TG2) zugeordnet sind, mehrere Schaltkupplungen (S1a; S2a, S3a, S4a, S5a; S2, S3, S4, S5, S6, SR, K) sowie eine mit beiden Teilgetrieben (TG1, TG2) abtriebsseitig verbundene Abtriebswelle (GW2) aufweist, wobei durch selektive Betätigung der Schaltkupplungen (S1a; S2a, S3a, S4a, S5a; S2, S3, S4, S5, S6, SR, K) und der Eingangskupplungen (K1, K2) verschiedene Gänge (1 bis 7, R1, R2) zwischen der Antriebswelle (GW1) und der Abtriebswelle (GW2) darstellbar sind, wobei zwei, mittels je einer reibschlüssigen Kupplung (Z1, Z2) schaltbare Drehmomentübertragungspfade (L1, L2) zwischen den Eingangswellen (W1, W2) vorgesehen sind, wobei ein koaxial zu einer der Eingangswellen (W1, W2) angeordnetes Zahnrad (ZS) vorgesehen ist, welches Bestandteil eines der beiden Drehmomentübertragungspfade (L1) ist und an der Bildung der Gänge (1 bis 7, R1, R2) nicht beteiligt ist.

## Beschreibung

Die Erfindung betrifft ein Getriebe für ein Kraftfahrzeug, beispielsweise ein Doppelkupplungsgetriebe. Die Erfindung betrifft ferner einen Antriebsstrang für ein Kraftfahrzeug mit einem solchen Getriebe.

Die Patentanmeldung DE 102 25 331 A1 beschreibt ein Lastschaltgetriebe mit einer Zentralsynchronisierung. Das Lastschaltgetriebe weist zwei Eingangswellen, eine Vorgelegewelle und eine Nebenwelle auf. Zur zentralen Synchronisierung der als unsynchronisiert ausgeführten Schaltelemente sind zwei Synchronelemente vorgesehen, welche auf der Nebenwelle angeordnet ist. Die zwei Synchronelemente sind zur Herstellung einer Drehmomentübertragung zwischen den Eingangswellen vorgesehen. Die Drehmomentübertragung zwischen der Nebenwelle und den Eingangswellen erfolgt über Zahnradpaarungen, welche an der Gangbildung des Lastschaltgetriebes beteiligte Zahnräder nutzen. Durch Ansteuerung der Synchronelemente kann eine Synchronisierung der Schaltelemente sowohl bei einem Hochschaltvorgang als auch bei einem Rückschaltvorgang durchgeführt werden.

Die Nutzung von Zahnrädern, welche für die Gangbildung ohnehin vorhanden sind, ist zwar hinsichtlich des Herstellungsaufwands des Getriebes vorteilhaft. Jedoch ist die maximal mögliche Synchronisierungswirkung der Zentralsynchronisierung von den Übersetzungsverhältnissen der Zahnradpaarungen zwischen der Nebenwelle und den Eingangswellen begrenzt. Es muss daher ein Kompromiss zwischen Synchronisierungswirkung und Gangabstufung getroffen werden. Ein derartiger Kompromiss ist jedoch beispielsweise bei Getrieben mit zumindest einem Windungsgang schwer einzugehen, da im Windungsgang mehrere zur Gangbildung vorgesehene Zahnradpaarungen benutzt werden. Ein derartiges Getriebe ist beispielhaft aus der Patentanmeldung DE 10 2007 049 271 A1 bekannt. Eine Änderung der Übersetzungsverhältnisse hätte daher Auswirkungen auf mehrere Gänge, wodurch die Bildung einer gleichmäßigen Gangabstufung erheblich erschwert wird.

Es ist daher Aufgabe der Erfindung ein Getriebe mit einer zentralen Synchronisiereinheit bereitzustellen, deren Leistungsfähigkeit von der Gangabstufung weitgehend unabhängig ist, ohne den Bauaufwand des Getriebes in hohem Maße zu erhöhen.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Es wird ein Getriebe für ein Kraftfahrzeug vorgeschlagen, welches eine Antriebswelle, zwei Teilgetriebe, eine Mehrzahl von Schaltkupplungen sowie eine Abtriebswelle umfasst. Jedem der beiden Teilgetriebe sind eine Eingangskupplung und eine Eingangswelle zugeordnet. Die Abtriebswelle ist mit beiden Teilgetrieben verbunden. Durch Schließen der jeweiligen Eingangskupplung ist die jeweilige Eingangswelle mit der Antriebswelle verbindbar. Durch selektives Schließen der Schaltkupplungen und der Eingangskupplungen sind verschiedene Gänge zwischen der Antriebswelle und der Abtriebswelle darstellbar. Zur Gangbildung können sowohl unsynchronisierte Schaltkupplungen als auch mittels herkömmlichen Sperrsynchronisierungen synchronisierte Schaltkupplungen verwendet werden.

Zur Synchronisierung der Schaltkupplungen sind zwei mittels je einer reibschlüssigen Kupplung schaltbare Drehmomentübertragungspfade zwischen den Eingangswellen vorgesehen. Die Drehmomentübertragungspfade verlaufen dabei nicht über eine der beiden Eingangskupplungen. Über die Drehmomentübertragungspfade kann Drehmoment von einem Teilgetriebe zu dem anderen Teilgetriebe übertragen werden.

Erfindungsgemäß ist ein koaxial zu zumindest einer der Eingangswellen angeordnetes Zahnrad vorgesehen, welches Bestandteil eines der beiden Drehmomentübertragungspfade ist und zudem an der Bildung der Gänge zwischen Antriebswelle und Abtriebswelle nicht beteiligt ist. Im Vergleich zum Stand der Technik ist somit nur ein zusätzliches Zahnrad nötig, wodurch sich der Bauaufwand des Getriebes nur geringfügig erhöht. Durch dieses zusätzliche Zahnrad lässt sich jedoch das Übersetzungsverhältnis eines der Drehmomentübertragungspfade unabhängig von den Übersetzungsverhältnissen der gangbildenden Zahnradpaarungen wählen, sodass die gewünschte Synchronisierungswirkung darstellbar ist.

Vorzugsweise ist das Zahnrad, welches Bestandteil eines der Drehmomentübertragungspfade ist und an der Bildung der Gänge nicht beteiligt ist, ein Festrad einer der Eingangswellen, welches gemäß einer bevorzugten Ausgestaltung mit einem weiteren als Festrad ausgebildeten Zahnrad einteilig verbunden ist. Dieses weitere Zahnrad ist an der Bildung zumindest eines der Gänge beteiligt. Ein derartiger Aufbau ist besonders kompakt.

Vorzugsweise werden die beiden schaltbaren Drehmomentübertragungspfade zwischen den Eingangswellen durch eine erste, eine zweite und eine dritte Zahnradpaarung gebildet. Zwei dieser drei Zahnradpaarungen weisen je ein Zahnrad auf, welche an der Bildung zumindest eines Anteils der Gänge beteiligt sind. Das zuvor erwähnte weitere Zahnrad kann eines dieser Zahnräder sein. Durch Ausnutzung von zwei zur Gangbildung verwendeten Zahnrädern in den Drehmomentübertragungspfaden wird der Bauaufwand des Getriebes gering gehalten. Vorzugsweise sind beide diese Zahnräder als Festräder ausgebildet, welche je einer der Eingangswellen zugeordnet sind, und/oder kämmen zur Gangbildung mit jeweils zwei weiteren Zahnrädern. Gemäß einer bevorzugten Ausgestaltung ist das koaxial zu einer der Eingangswellen angeordnete Zahnrad, welches Bestandteil eines der Drehmomentübertragungspfade ist und an der Bildung der Gänge nicht beteiligt ist, axial zwischen den zuvor erwähnten Festrädern angeordnet.

Gemäß einer alternativen Ausgestaltung ist ein zusätzliches Zahnrad vorgesehen, welches koaxial zu zumindest einer der Eingangswellen ist, an der Bildung der Gänge nicht beteiligt ist und Bestandteil eines der beiden schaltbaren Drehmomentübertragungspfade zwischen den Eingangswellen ist. Eine derartige Ausgestaltung eignet sich besonders für einen Getriebeaufbau, dessen Übersetzungsverhältnisse für eine zentrale Synchronisierung ungeeignet sind. Denn derart sind die Übersetzungsverhältnisse beider Drehmomentübertragungspfade weitgehend unabhängig von den zur Gangbildung verwendeten Übersetzungsverhältnissen auswählbar.

Vorzugsweise sind die beiden Kupplungen der schaltbaren Drehmomentübertragungspfade koaxial zu einer weiteren Welle angeordnet, welche achsparallel zu den Eingangswellen angeordnet ist. Eine solche Anordnung erlaubt einen axial besonders kompakten Aufbau; ein solcher ist besonders für eine Verwendung des Getriebes in einem quer zur Fahrtrichtung ausgerichteten Antriebsstrang von hoher Bedeutung. Der weiteren Welle können drei Zahnräder zugeordnet sein, welche Bestandteil jeweils einer der drei Zahnradpaarungen der Drehmomentübertragungspfade sind. Zwei dieser drei Zahnräder sind vorzugsweise als Losräder ausgebildet. Durch Schließen je einer der beiden Kupplungen ist eine drehmomentübertragende Verbindung zwischen dem jeweiligen Losrad und der weiteren Welle herstellbar. Das verbleibende der drei Zahnräder ist vorzugsweise mit der weiteren Welle drehfest verbunden, und bildet somit ein Festrad. Eines der Losräder kämmt dabei mit jenem Zahnrad, welches koaxial zu einer der Eingangswellen angeordnet ist und an der Bildung der Gänge nicht beteiligt ist.

Vorzugsweise ist zumindest einer der Gänge des Getriebes ein Windungsgang. Ein Windungsgang bezeichnet einen Gang, in dem beide Teilgetriebe zur Gangbildung beitragen. Dazu ist eine der Schaltkupplungen dazu eingerichtet, die beiden Eingangswellen unter Ausnutzung von zur Gangbildung vorgesehenen Zahnradpaarungen zu verbinden. Die erfindungsgemäße Lösung ist für ein derartiges Getriebe besonders geeignet, da bestimmte Übersetzungsverhältnisse der gangbildenden Zahnradpaarungen bei solchen Getrieben nicht nur für einen, sondern für mehrere Gänge geeignet sein müssen. Eine geringfügige Variation der einzelnen Übersetzungsverhältnisse kann die Gangabstufung eines solchen Getriebes daher wesentlich beeinflussen. Die erfindungsgemäß reduzierte Abhängigkeit zwischen der gewünschten Synchronisierungswirkung und den Übersetzungsverhältnissen der gangbildenden Zahnradpaarungen ist somit besonders für Getriebe mit einem oder mehreren Windungsgängen vorteilhaft.

Vorzugsweise ist das Übersetzungsverhältnis jeder der beiden Drehmomentübertragungspfade zwischen den beiden Eingangswellen größer als der größte Stufensprung zwischen zwei in einer Gangreihe benachbarten Gängen. Unter "Stufensprung" wird das Verhältnis zwischen den Übersetzungsverhältnissen zweier Gänge verstanden. Der Begriff "Gangreihe" kennzeichnet die Reihenfolge der Gänge entsprechend ihrer Übersetzungsverhältnisse. In der Gangreihe benachbarte Gänge sind beispielsweise der erste Gang und der zweite Gang; bzw. der zweite Gang und der dritte Gang, etc. Für einen erfolgreichen Synchronisiervorgang bei einem Gangwechsel zwischen in der Gangreihe benachbarten Gängen muss das Übersetzungsverhältnis jeder der beiden Drehmomentübertragungspfade gleich groß oder geringfügig kleiner sein als der Stufensprung zwischen diesen beiden Gängen. Ein entsprechend größeres Übersetzungsverhältnis der beiden Drehmomentübertragungspfade ermöglicht jedoch eine verbesserte Unterstützung beim Lastfreistellen der Schaltkupplungen.

Vorzugsweise ist das Getriebe zur Verwendung in einem quer zur Fahrtrichtung eines Kraftfahrzeugs ausgerichteten Antriebsstrangs vorgesehen, beispielsweise in einem Front-Quer- oder Heck-Quer-Antriebsstrang. Denn der in einem solchen Kraftfahrzeug für das Getriebe zur Verfügung stehende Bauraum zwischen Antriebsmotor und strukturellen Längsträger des Kraftfahrzeugs ist üblicherweise sehr begrenzt. Der hier vorgeschlagene Aufbau ermöglicht einen axial besonders kurzen Aufbau des Getriebes, und ist daher für eine derartige Anwendung gut geeignet.

Das Getriebe kann Bestandteil eines Antriebsstrangs für ein Kraftfahrzeug sein. Der Antriebsstrang weist neben dem Getriebe auch einen Verbrennungsmotor auf, welche mit der Antriebswelle verbunden, oder über eine Trennkupplung verbindbar sein kann. Zwischen Verbrennungsmotor und Antriebswelle können Vorrichtungen zur Reduzierung von Drehschwingungen vorgesehen sein, beispielsweise ein Drehschwingungsdämpfer und/oder ein Drehschwingungstilger. Die Abtriebswelle des Getriebes kann mit einem getriebe-internen oder getriebe-externen Differentialgetriebe wirkverbunden sein, welches mit Rädern des Kraftfahrzeugs wirkverbunden ist. Das Getriebe kann eine elektrische Maschine aufweisen, welche zum Antrieb des Kraftfahrzeugs mit der Antriebswelle, einer der Eingangswellen oder der Abtriebswelle verbunden ist.

Das gegenständliche Getriebe ist für einen Antriebsstrang mit zumindest einer elektrischen Maschine besonders geeignet, und zwar unabhängig davon ob die elektrische Maschine Bestandteil des Getriebes ist oder nicht. Denn soll mittels der elektrischen Maschine im Schubbetrieb rekuperiert werden, so sollen auch Schubrückschaltungen ohne wesentliche Unterbrechung des Leistungsflusses zwischen Abtriebswelle und elektrischer Maschine erfolgen. Soll die Schubrückschaltung durch überschneidendes Öffnen und Schließen der Eingangskupplungen erfolgen, so ist für das vorhergehende Einlegen der Schaltkupplungen eine besonders leistungsfähige Synchronisierung von Vorteil, insbesondere wenn die elektrische Maschine mit der Antriebswelle verbunden ist.

Ausführungsbeispiele der Erfindung sind nachfolgend anhand der beigefügten Figuren detailliert beschrieben. Es zeigen:
Fig. 1 eine abstrakte Darstellung eines Getriebes;
Fig. 2 ein Getriebe gemäß einem ersten Ausführungsbeispiel;
Fig. 3 ein Getriebe gemäß einem zweiten und dritten Ausführungsbeispiel;
Fig. 4 ein Schaltschema für die Getriebe gemäß den beiden Ausführungsbeispielen; und
Fig. 5 einen Antriebsstrang für ein Kraftfahrzeug.

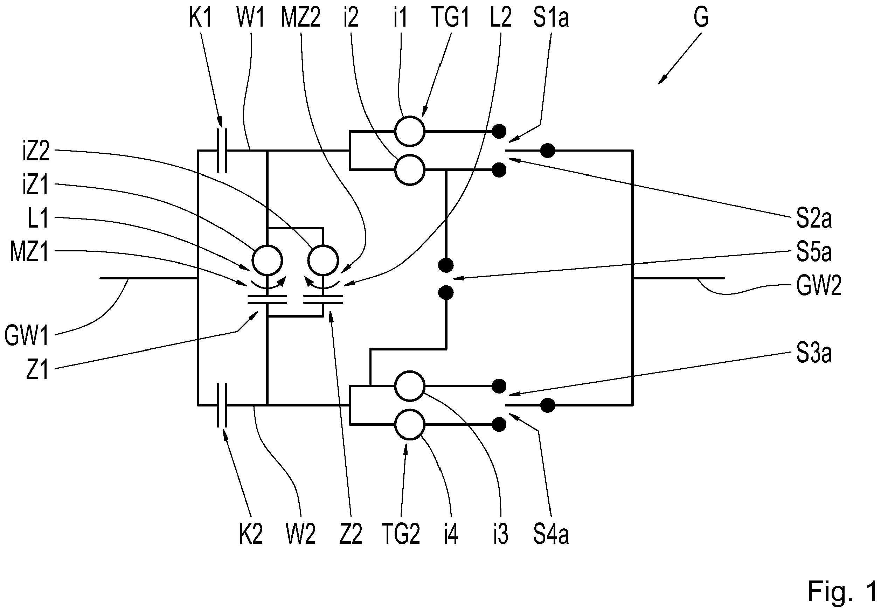

Fig. 1 zeigt eine abstrakte Darstellung eines Getriebes G. Das Getriebe G weist eine Antriebswelle GW1, ein erstes und zweites Teilgetriebe TG1, TG2, unsynchronisierte formschlüssige Schaltkupplungen S1a, S2a, S3a, S4a, S5a und eine Abtriebswelle GW2 auf. Dem ersten Teilgetriebe TG1 ist eine erste Eingangswelle W1 zugeordnet, welche durch Schließen einer ersten Eingangskupplung K1 mit der Antriebswelle GW1 verbindbar ist. Dem zweiten Teilgetriebe TG2 ist eine zweite Eingangswelle W2 zugeordnet, welche durch Schließen einer zweiten Eingangskupplung K2 mit der Antriebswelle GW1 verbindbar ist. Beide Teilgetriebe TG1, TG2 sind ausgangsseitig mit der Abtriebswelle GW2 verbunden.

Dem ersten Teilgetriebe TG1 sind Übersetzungsstufen i1, i2 zugeordnet. Dem zweiten Teilgetriebe TG2 sind Übersetzungsstufen i3, i4 zugeordnet. Die Übersetzungsstufen i1, i2, i3, i4 sind beispielsweise als Stirnradstufen ausgebildet, und weisen voneinander unterschiedliche Übersetzungsverhältnisse auf. Durch selektives Schließen der Schaltkupplungen S1a, S2a, S3a, S4a, S5a und der Eingangskupplungen K1, K2 werden verschiedene Gänge zwischen der Antriebswelle GW1 und der Abtriebswelle GW2 dargestellt. Die Schaltkupplung S5a verbindet die beiden Teilgetriebe TG1, TG2, sodass ein Leistungsfluss von Antriebswelle GW1 zu Abtriebswelle GW2 über Übersetzungsstufen i2, i3 beider Teilgetriebe TG1, TG2 verläuft. Ein derartiger gebildeter Gang wird auch als Windungsgang bezeichnet.

Das Getriebe G weist ferner einen ersten und einen zweiten schaltbaren Drehmomentübertragungspfad L1, L2 zwischen den Eingangswellen W1, W2 auf. Der erste Drehmomentübertragungspfad L1 umfasst eine erste Kupplung Z1 und ein erstes Übersetzungsverhältnis iZ1. Der zweite Drehmomentübertragungspfad L2 umfasst eine zweite Kupplung Z2 und ein zweites Übersetzungsverhältnis iZ2. Die erste Kupplung Z1 und die zweite Kupplung Z2 sind jeweils als reibschlüssige Kupplungen ausgebildet.

Die beiden Drehmomentübertragungspfade L1, L2 dienen zur Synchronisierung der Schaltkupplungen S1a, S2a, S3a, S4a, S5a. Ist beispielsweise die erste Eingangskupplung K1 und die Schaltkupplung S1a geschlossen sowie die zweite Eingangskupplung K2 geöffnet, so kann durch geeignete Ansteuerung der ersten Kupplung Z1 oder der zweiten Kupplung Z2 ein Drehmoment MZ1, MZ2 von der ersten Eingangswelle W1 auf die zweite Eingangswelle W2 übertragen werden, um die zweite Eingangswelle W2 je nach Bedarf auf eine Zieldrehzahl zu beschleunigen oder abzubremsen, um bei geöffneter Eingangskupplung K2 beispielsweise die Schaltkupplung S3a schließen zu können. Die beiden Übersetzungsverhältnisse iZ1, iZ2 sind dabei voneinander unterschiedlich. Beispielhaft dient der erste Drehmomentübertragungspfad L1 zum Beschleunigen der zweiten Eingangswelle W2 im Verhältnis zu einer Drehzahl der ersten Eingangswelle W1, und der zweite Drehmomentübertragungspfad L2 zum Verzögern der zweiten Eingangswelle W2 im Verhältnis zur Drehzahl der ersten Eingangswelle W1. Hat die zweite Eingangswelle W2 ihre Zieldrehzahl erreicht, so kann die Schaltkupplung S3a geschlossen werden. Ein Gangwechsel kann nun durch gleichzeitiges Öffnen der ersten Eingangskupplung K1 und Schließen der zweiten Eingangskupplung K2 erfolgen, ohne die Zugkraft zwischen Antriebswelle GW1 und Abtriebswelle GW2 zu unterbrechen. Die in Fig. 1 angegebenen Pfeilrichtungen der Drehmomente MZ1, MZ2 dienen lediglich zur Illustration, und sind nicht einschränkend.

In gleicher Weise dienen die beiden Drehmomentübertragungspfade L1, L2 zum Beschleunigen oder Abbremsen der ersten Eingangswelle W1 auf eine Zieldrehzahl. Der erste Drehmomentübertragungspfad L1 dient nun zum Verzögern der ersten Eingangswelle W1 im Verhältnis zur Drehzahl der zweiten Eingangswelle W2, und der zweite Drehmomentübertragungspfad L2 dient nun zum Beschleunigen der ersten Eingangswelle W1 im Verhältnis zur Drehzahl der zweiten Eingangswelle W2. Derart können die jeweils zu schließenden Schaltkupplungen S1a, S2a, S3a, S4a, S5a sowohl bei einem Hochschaltvorgang als auch bei einem Rückschaltvorgang synchronisiert werden. Die beiden Drehmomentübertragungspfade L1, L2 dienen hier beispielhaft nicht zur Gangbildung. Bei entsprechender Auslegung der Kupplungen Z1, Z2 kann zumindest einer der Drehmomentübertragungspfade L1, L2 jedoch auch zur Gangbildung verwendet werden.

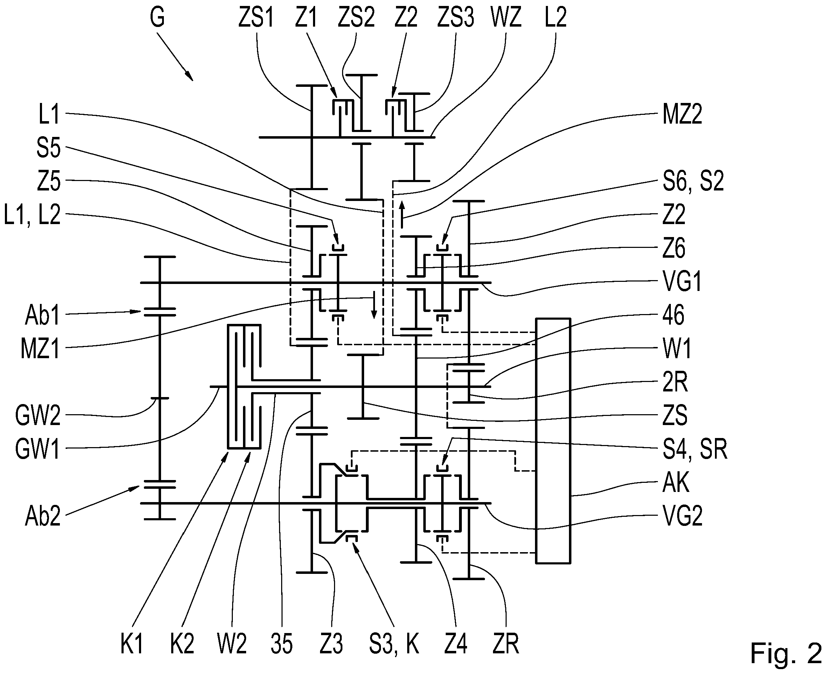

Fig. 2 zeigt ein erstes Ausführungsbeispiel des Getriebes G. Die Eingangskupplungen K1, K2 sind koaxial zueinander angeordnet. Die zweite Eingangswelle W2 ist entsprechend als Hohlwelle ausgebildet, und umschließt die erste Eingangswelle W1 zumindest abschnittsweise. Auf der ersten Eingangswelle W1 sind drei als Festräder ausgeführte Zahnräder ZS, 46, 2R angeordnet. Auf der zweiten Eingangswelle W2 ist ein als Festrad ausgeführtes Zahnrad 35 angeordnet. Das Getriebe G weist zwei Vorgelegewellen VG1, VG2 auf. Auf der ersten Vorgelegewelle VG1 sind drei als Losräder ausgeführte Zahnräder Z5, Z6, Z2 angeordnet. Auf der zweiten Vorgelegewelle VG2 sind drei als Losräder ausgeführte Zahnräder Z3, Z4, ZR angeordnet. Das Getriebe G gemäß dem ersten Ausführungsbeispiel umfasst sieben Schaltkupplungen, welche als S5, S6, S2, S3, S4, SR, K bezeichnet sind. Durch Schließen der Schaltkupplung S5 wird das Losrad 5 mit der ersten Vorgelegewelle VG1 verbunden. Durch Schließen der Schaltkupplung S6 wird das Zahnrad Z6 mit der ersten Vorgelegewelle VG1 verbunden. Durch Schließen der Schaltkupplung S2 wird das Zahnrad Z2 mit der ersten Vorgelegewelle VG1 verbunden. Durch Schließen der Schaltkupplung S3 wird das Zahnrad Z3 mit der zweiten Vorgelegewelle VG2 verbunden. Durch Schließen der Schaltkupplung S4 wird das Zahnrad Z4 mit der zweiten Vorgelegewelle VG2 verbunden. Durch Schließen der Schaltkupplung SR wird das Zahnrad ZR mit der zweiten Vorgelegewelle VG2 verbunden. Durch Schließen der Schaltkupplung K wird das Zahnrad Z3 mit dem Zahnrad Z4 verbunden. Das Betätigen, also das Öffnen und Schließen der Schaltkupplungen S5, S6, S2, S3, S4, SR, K erfolgt durch eine Aktuatorik AK, beispielsweise mittels Schaltstangen. Das Zahnrad 35 kämmt mit den Zahnrädern Z5 und Z3. Das Zahnrad 46 kämmt mit den Zahnrad Z4 und Z6. Das Zahnrad 2R kämmt mit dem Zahnrad Z2 und über ein Fig. 1 nicht dargestelltes Zwischenrad, welches mit dem Zahnrad ZR kämmt. Beide Vorgelegewellen VG1, VG2 sind über Stirnradstufen Ab1, Ab2 mit der Abtriebswelle GW2 verbunden.

Das Getriebe G weist ferner eine weitere Welle WZ auf, welche achsparallel zu den Eingangswellen W1, W2 und achsparallel zu den Vorgelegewellen VG1, VG2 angeordnet ist. Der weiteren Welle sind drei Zahnräder ZS1, ZS2, ZS3 zugeordnet. Das Zahnrad ZS1 ist als Festrad ausgebildet. Die Zahnräder ZS2, ZS3 sind als Losräder ausgebildet. Eine Drehmomentübertragung zwischen Zahnrad ZS2 und der weiteren Welle WZ erfolgt durch Schließen einer ersten Kupplung Z1. Eine Drehmomentübertragung zwischen Zahnrad ZS3 und der weiteren Welle WZ erfolgt durch Schließen einer zweiten Kupplung Z2. Die Kupplungen Z1, Z2 sind koaxial zur weiteren Welle WZ angeordnet.

Die Zahnräder ZS1, ZS2, ZS3 und die Kupplungen Z1, Z2 sind Bestandteil von zwei schaltbaren Drehmomentübertragungspfaden L1, L2 zwischen den beiden Eingangswellen W1, W2. Die beiden Drehmomentübertragungspfade sind durch eine erste Zahnradpaarung, eine zweite Zahnradpaarung und eine dritte Zahnradpaarung gebildet. Die erste Zahnradpaarung ergibt sich durch die Zahnräder 35 und ZS1. Die zweite Zahnradpaarung ergibt sich durch die Zahnräder ZS und ZS2. Die dritte Zahnradpaarung ergibt sich durch die Zahnräder 46 und ZS3. Die Zahnräder 35, ZS1; ZS, ZS2; 46, ZS3 der jeweiligen Zahnradpaarungen kämmen miteinander. Die erste Zahnradpaarung ist Bestandteil beider Drehmomentübertragungspfade L1, L2. Die zweite Zahnradpaarung ist Bestandteil des ersten Drehmomentübertragungspfads L1. Die dritte Zahnradpaarung ist Bestandteil des zweiten Drehmomentübertragungspfads L2.

Das Zahnrad ZS, welches Bestandteil der zweiten Zahnradpaarung und somit des ersten Drehmomentübertragungspfads L1 ist, trägt im Gegensatz zum Zahnrad 35 der ersten Zahnradpaarung und zum Zahnrad 46 der dritten Zahnradpaarung nicht zur Gangbildung bei, sondern dient ausschließlich zur Ausbildung des ersten Drehmomentübertragungspfads L1. Das Zahnrad ZS ist vorzugsweise einteilig mit dem Zahnrad 46 verbunden, und ist axial zwischen den Zahnrädern 35 und 46 angeordnet.

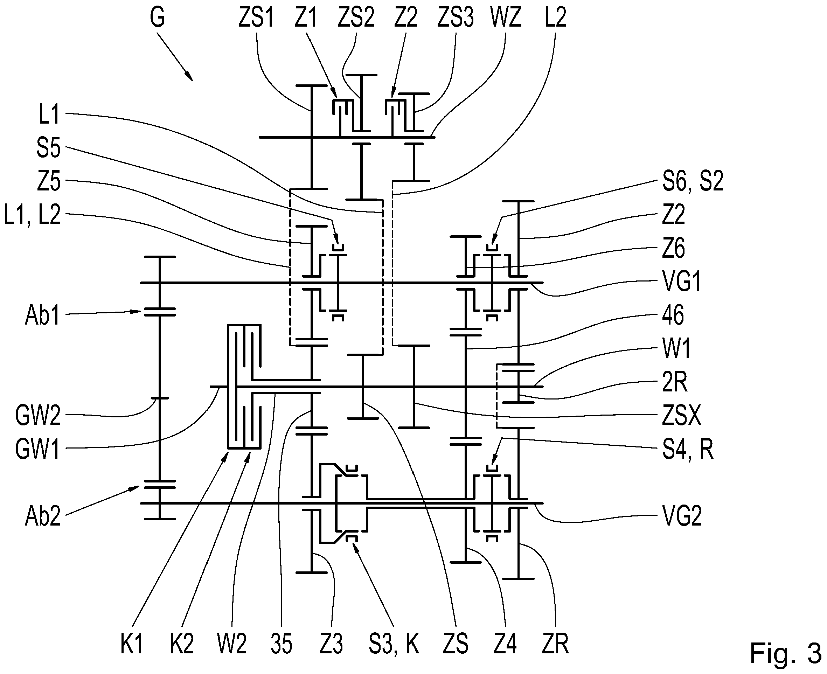

Fig. 3 zeigt ein zweites Ausführungsbeispiel des Getriebes G, welches im Wesentlichen dem in Fig. 2 dargestellten ersten Ausführungsbeispiel entspricht. Das Getriebe G weist nun ein zusätzliches Zahnrad ZSX auf, welches als Festrad der ersten Eingangswelle W1 ausgebildet ist. Das zusätzliche Zahnrad ZSX kämmt anstelle des Zahnrads 46 mit dem Zahnrad ZS3, ist somit Bestandteil des zweiten Drehmomentübertragungspfads L2 und ist an der Gangbildung nicht beteiligt. Das zusätzliche Zahnrad ZSX ist axial zwischen dem Zahnrad ZS und dem Zahnrad 46 angeordnet. Die Aktuatorik AK ist in Fig. 3 der Übersichtlichkeit halber nicht dargestellt.

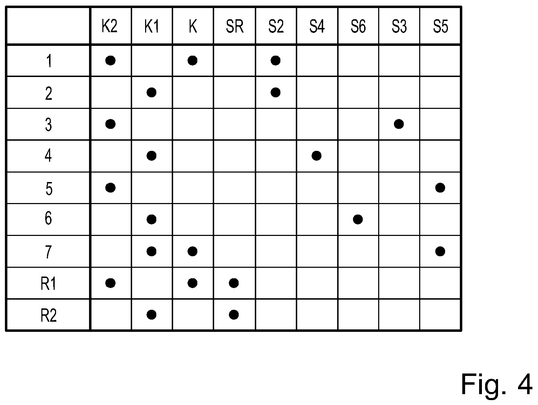

Fig. 4 zeigt eine Schalttabelle, welche für beide Ausführungsbeispiele des Getriebes G anwendbar ist. In den Zeilen des Schaltschemas sind Gänge 1 bis 7, R1, R2 angeführt. In den Spalten sind die Schaltkupplungen S5, S6, S2, S3, S4, SR, K sowie die Eingangskupplungen K1, K2 angeführt. Kreise bezeichnen den geschlossenen Zustand der Schaltkupplungen S5, S6, S2, S3, S4, SR, K sowie der Eingangskupplungen K1, K2 in Gängen 1 bis 7, R1, R2. Aus dem Schaltschema geht deutlich hervor, dass die beiden Kupplungen Z1, Z2, und somit die beiden Drehmomentübertragungspfade L1, L2 nicht zur Gangbildung des Getriebes G beitragen.

Die Stufensprünge zwischen in der Gangreihe benachbarten Gängen des Getriebes G, also beispielsweise zwischen Gang 1 und Gang 2 oder zwischen Gang 4 und Gang 5 sind vorzugsweise nicht identisch. Beispielsweise ist der Stufensprung zwischen Gang 1 und Gang 2 größer als der Stufensprung zwischen Gang 5 und Gang 6. Eine solche degressive Gangabstufung ist für einen Einsatz im Kraftfahrzeug-Antriebsstrang von Vorteil. Das Übersetzungsverhältnis iZ1, iZ2 zumindest eines, vorzugsweise beider der Drehmomentübertragungspfade L1, L2 ist beispielhaft größer als der größte Stufensprung zwischen in der Gangreihe benachbarten Gängen gleicher Drehrichtung. Gänge gleicher Drehrichtung bezeichnen Gänge, bei denen Antriebswelle GW1 und Abtriebswelle GW2 die gleiche Drehrichtung aufweisen.

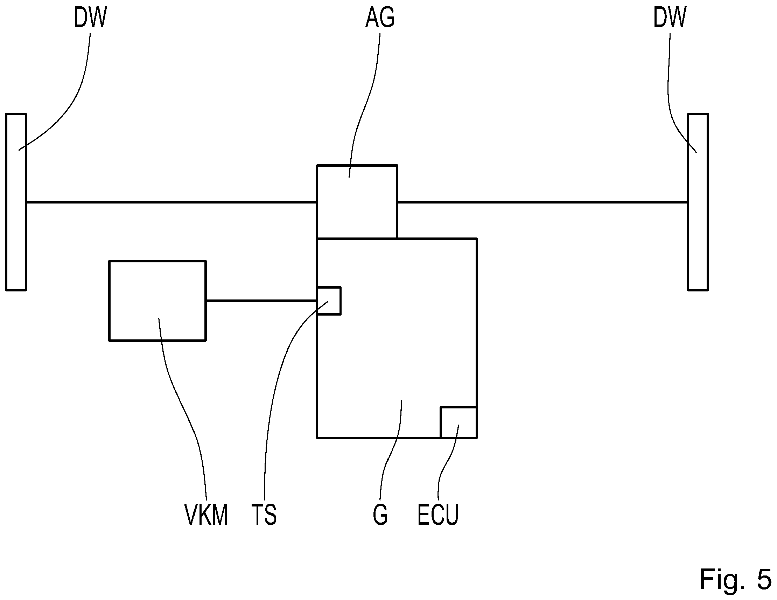

Fig. 5 zeigt einen Antriebsstrang für ein Kraftfahrzeug. wobei eine Verbrennungskraftmaschine VKM über einen zwischenliegenden Torsionsschwingungsdämpfer TS mit dem Getriebe G verbunden ist. Dem Getriebe G ist abtriebsseitig ein Differentialgetriebe AG nachgeschaltet, über welches eine Antriebsleistung auf Antriebsräder DW einer Antriebsachse des Kraftfahrzeuges verteilt wird. Das Getriebe G und der Torsionsschwingungsdämpfer TS sind dabei in einem gemeinsamen Gehäuse des Getriebes G angeordnet, in welches dann auch das Differentialgetriebe AG integriert sein kann. Wie zudem in Fig. 5 zu erkennen ist, sind die Verbrennungskraftmaschine VKM, der Torsionsschwingungsdämpfer TS, das Getriebe G und auch das Differentialgetriebe AG quer zu einer Fahrtrichtung des Kraftfahrzeuges ausgerichtet.

Das Getriebe G umfasst eine Steuereinheit ECU, welche zumindest zur Steuerung der Aktuatorik AK und zur Steuerung der reibschlüssigen Kupplungen Z1, Z2 eingerichtet ist. Auf der Steuereinheit ECU kann ein Kennfeld hinterlegt sein, welches zur Steuerung der reibschlüssigen Kupplungen Z1, Z2 zur Anwendung kommt.

### Bezuqszeichen

- G: Getriebe
- GW1: Antriebswelle
- GW2: Abtriebswelle
- TG1: Erstes Teilgetriebe
- TG2: Zweites Teilgetriebe
- K1: Erste Eingangskupplung
- K2: Zweite Eingangskupplung
- S1a-S5a: Schaltkupplungen
- i1-i4: Übersetzungsstufen
- S2-S6, SR, K: Schaltkupplungen
- VG1, VG2: Vorgelegewellen
- L1, L2: Drehmomentübertragungspfade
- iZ1, iZ2: Übersetzungsverhältnisse der Drehmomentübertragungspfade
- Z1, Z2: Reibschlüssige Kupplungen
- MZ1, MZ2: Drehmoment
- Z2-Z6, ZR: Zahnräder
- 35, 46, 2R: Zahnräder
- ZS: Zahnrad
- ZSX: Zusätzliches Zahnrad
- ZS1, ZS2, ZS3: Zahnräder
- WZ: Weitere Welle
- Ab1, Ab2: Stirnradstufen
- 1-7, R1, R2: Gänge
- ECU: Steuereinheit
- AK: Aktuatorik
- VKM: Verbrennungskraftmaschine
- TS: Torsionsschwingungsdämpfer
- AG: Differentialgetriebe
- DW: Antriebsrad

## Patentansprüche

1. Getriebe (G) für ein Kraftfahrzeug, wobei das Getriebe (G) eine Antriebswelle (GW1), eine über eine erste Eingangskupplung (K1) mit der Antriebswelle (GW1) verbindbare erste Eingangswelle (W1), eine über eine zweite Eingangskupplung (K2) mit der Antriebswelle (GW1) verbindbare zweite Eingangswelle (W2), eine Mehrzahl von Schaltkupplungen (S1a, S2a, S3a, S4a, S5a; S2, S3, S4, S5, S6, SR, K) sowie eine Abtriebswelle (GW2) aufweist,
- wobei die erste Eingangswelle (W1) einem ersten Teilgetriebe (TG1) und die zweite Eingangswelle (W2) einem zweiten Teilgetriebe (TG2) zugeordnet ist, wobei die Abtriebswelle (GW2) mit beiden Teilgetrieben (TG1, TG2) verbunden ist,
- wobei durch selektive Betätigung der Schaltkupplungen (S1a; S2a, S3a, S4a, S5a; S2, S3, S4, S5, S6, SR, K) und der Eingangskupplungen (K1, K2) verschiedene Gänge (1 bis 7, R1, R2) zwischen der Antriebswelle (GW1) und der Abtriebswelle (GW2) darstellbar sind,
- wobei zwei, mittels je einer reibschlüssigen Kupplung (Z1, Z2) schaltbare Drehmomentübertragungspfade (L1, L2) zwischen der ersten Eingangswelle (W1) und der zweiten Eingangswelle (W2) vorgesehen sind,
**dadurch gekennzeichnet, dass** ein koaxial zu zumindest einer der Eingangswellen (W1, W2) angeordnetes Zahnrad (ZS) vorgesehen ist, welches Bestandteil eines der beiden Drehmomentübertragungspfade (L1) ist und an der Bildung der Gänge (1 bis 7, R1, R2) nicht beteiligt ist.

2. Getriebe (G) nach Anspruch 1, **dadurch gekennzeichnet, dass** das Zahnrad (ZS), welches Bestandteil eines der beiden Drehmomentübertragungspfade (L1) ist und an der Bildung der Gänge (1 bis 7, R1, R2) nicht beteiligt ist, ein Festrad einer der Eingangswellen (W1, W2) ist.

3. Getriebe (G) nach Anspruch 2, **dadurch gekennzeichnet, dass** das Zahnrad (ZS) mit einem weiteren als Festrad ausgebildeten Zahnrad (46) einteilig verbunden ist, welches zur Bildung zumindest eines der Gänge (1, 3, 5, 7, R1) beiträgt.

4. Getriebe (G) nach Anspruch 1 oder Anspruch 2, **dadurch gekennzeichnet, dass** die beiden Drehmomentübertragungspfade (L1, L2) durch eine erste Zahnradpaarung (35, ZS1), eine zweite Zahnradpaarung (ZS, ZS2) und eine dritte Zahnradpaarung (46, ZS3) gebildet sind, wobei zwei Zahnräder (35, 46), welche an der Bildung zumindest eines Anteils der Gänge (1, 3, 4, 5, 6, 7, R1) beteiligte sind, Bestandteil von zwei der drei Zahnradpaarungen (35, ZS1; 46, ZS3) sind.

5. Getriebe (G) nach Anspruch 4, **dadurch gekennzeichnet, dass** die an der Bildung des Anteil der Gänge (1, 3, 4, 5, 6, 7, R1) beteiligten Zahnräder (35, 46), welche Bestandteil von zwei der drei Zahnradpaarungen (35, ZS1; 46, ZS3) sind, jeweils einer der Eingangswellen (W1, W2) als Festrad zugeordnet sind.

6. Getriebe (G) nach Anspruch 4 oder Anspruch 5, **dadurch gekennzeichnet, dass** die an der Bildung des Anteil der Gänge (1, 3, 4, 5, 6, 7, R1) beteiligten Zahnräder (35, 46), welche Bestandteil von zwei der drei Zahnradpaarungen (35, ZS1; 46, ZS3) sind, mit jeweils zwei weiteren Zahnrädern (Z3, Z5; Z4, Z6) kämmen.

7. Getriebe (G) nach Anspruch 5 oder Anspruch 6, **dadurch gekennzeichnet, dass** das koaxial zu einer der Eingangswellen (W1, W2) angeordnete Zahnrad (ZS), welches Bestandteil eines der beiden Drehmomentübertragungspfade (L1) ist und an der Bildung der Gänge (1 bis 7, R1, R2) nicht beteiligt ist, axial zwischen den Zahnrädern (35, 46) angeordnet ist, welche Bestandteil von zwei der Zahnradpaarungen (35, ZS1; 46, ZS3) sind, die als Festrad an der Bildung der Gänge (1, 3, 4, 5, 6, 7, R1) beteiligt sind.

8. Getriebe (G) nach einem der vorangehenden Ansprüche, **dadurch gekennzeichnet, dass** ein koaxial zu zumindest einer der Eingangswellen (W1, W2) angeordnetes zusätzliches Zahnrad (ZSX) vorgesehen ist, welches Bestandteil eines der beiden Drehmomentübertragungspfade (L2) ist und an der Bildung der Gänge (1 bis 7, R1, R2) nicht beteiligt ist.

9. Getriebe (G) nach einem der vorangehenden Ansprüche, **dadurch gekennzeichnet, dass** die beiden Kupplungen (Z1, Z2) der Drehmomentübertragungspfade (L1, L2) koaxial zu einer weiteren Welle (WZ) angeordnet sind, welche achsparallel zu den Eingangswellen (GW1, GW2) angeordnet ist.

10. Getriebe (G) nach Anspruch 9 unter Rückbezug auf einen der Ansprüche 4 bis Anspruch 7, **dadurch gekennzeichnet, dass** der weiteren Welle (WZ) drei Zahnräder (ZS1, ZS2, ZS3) zugeordnet sind, welche Bestandteil jeweils einer der drei Zahnradpaarungen (35, ZS1; ZS, ZS2; 46, ZS3).

11. Getriebe (G) nach Anspruch 10, **dadurch gekennzeichnet, dass** zwei der weiteren Welle (WZ) zugeordneten Zahnräder (ZS2, ZS3) Losräder sind, wobei durch Schließen jeweils einer der beiden Kupplungen (Z1, Z2) eine drehmomentübertragende Verbindung zwischen dem der schließenden Kupplung (Z1, Z2) zugeordneten Losrad (ZS2, ZS3) und der weiteren Welle (WZ) herstellbar ist.

12. Getriebe (G) nach Anspruch 11, **dadurch gekennzeichnet, dass** eines der weiteren Welle (WZ) zugeordneten Losräder (ZS2) mit jenem Zahnrad (ZS, ZSX) kämmt, welches koaxial zu einer der Eingangswellen (W1, W2) angeordnet ist und an der Bildung der Gänge (1 bis 7, R1, R2) nicht beteiligt ist.

13. Getriebe (G) nach einem der vorangehenden Ansprüche, **dadurch gekennzeichnet, dass** zumindest einer der Gänge (1, 7, R1) ein Windungsgang ist, in welchem beide Teilgetriebe (TG1, TG2) zur Gangbildung beitragen.

14. Getriebe (G) nach einem der vorangehenden Ansprüche, **dadurch gekennzeichnet, dass** ein Übersetzungsverhältnis (iL1, iL2) jeder der beiden Drehmomentübertragungspfade (L1, L2) größer ist als der größte Stufensprung zwischen zwei in einer Gangreihe benachbarten Gänge (1 bis 7) gleicher Drehrichtung.

15. Getriebe (G) nach einem der vorangehenden Ansprüche, **dadurch gekennzeichnet, dass** das Getriebe (G) zur Verwendung in einem quer zur Fahrtrichtung eines Kraftfahrzeugs ausgerichteten Antriebsstrang vorgesehen ist.

16. Antriebsstrang für ein Kraftfahrzeug, **gekennzeichnet durch** ein Getriebe (G) gemäß einem der Ansprüche 1 bis 15.
